# EUROPEAN PATENT APPLICATION

(11) **EP 4 342 728 A1**
(43) Date of publication of application: **27.03.2024**
(21) Application number: 23196843.9
(22) Date of filing: 12.09.2023
(51) Int. Cl.: B60N 3/02

(54) **SUPPORT RAIL BRACKET**

(30) Priority: 14.09.2022 US 202263406273 P
(71) Applicant: Apple Inc., Cupertino CA 95014 (US)
(72) Inventor: WOODS, Matthew I., Cupertino, 95014 (US); LEMKE-RAEDLER, Dirk, Cupertino, 95014 (US)
(74) Representative: Barton, Russell Glen

(57) **Abstract**

A support rail bracket includes a base. A securement portion is coupled to the base and configured to secure an end section of a support rail, which is graspable for support. A deformable portion is coupled to and extends between the base and the securement portion. The deformable portion is configured to resist movement of the end section in a first direction and deform to allow movement of the end section in a second direction that is approximately opposite the first direction.

## Description

### CROSS-REFERENCE TO RELATED APPLICATIONS

This application claims the benefit of United States Provisional Application No. 63/406,273, filed on September 14, 2022, the contents of which are hereby incorporated by reference in its entirety for all purposes.

### FIELD

The present disclosure relates generally to the field of brackets for support rails.

### BACKGROUND

A support rail may be included in various structures to support ingress and egress. In some instances, a support rail may be included to be grasped when entering or exiting the structure, or for support when moving within the structure. When not being used for the purposes described, a support rail may otherwise be contacted.

### SUMMARY

One aspect of the disclosure is related to a support rail bracket for a vehicle that includes a base configured to couple to the vehicle. A securement portion is coupled to the base and configured to secure an end section of a support rail, which is graspable for support during transportation. A deformable portion is coupled to and extends between the base and the securement portion. The deformable portion is configured to resist movement of the end section in a first direction and deform to allow movement of the end section in a second direction that is approximately opposite the first direction.

Another aspect of the disclosure is related to a support rail bracket for a vehicle that includes a base configured to couple to the vehicle. Braces are coupled to and extend away from the base, and the braces are disposed approximately perpendicular relative to the base. Lateral supports are coupled to and extend between the braces, and the lateral supports are configured to secure an end section of a support rail to the base, where the support rail is graspable for support during transportation. A deformable portion is positioned between the base and one of the braces and is configured to limit movement of the braces when the deformable portion is under a tensile load. The deformable portion is also configured to deform to allow movement of the braces when the deformable portion is under a compressive load.

Yet another aspect of the disclosure is related to a support rail bracket for a vehicle that includes a base coupled to the vehicle. A securement portion is coupled to the base and is configured to secure an end section of a support rail. A deformable portion is coupled to and extends between the securement portion and the base. The deformable portion is configured to resist movement of the end section when a load applied to the support rail is less than a threshold value, and to deform to allow movement of the end section when the load applied to the support rail is greater than the threshold value.

### BRIEF DESCRIPTION OF THE DRAWINGS

FIG. 1 is an illustration of a support assembly for a vehicle.
FIGS. 2-3 are illustrations of a support rail bracket for the support assembly of FIG. 1.
FIG. 4 is an illustration of a deformable portion of the support rail bracket of FIGS. 2-3.
FIG. 5 is an illustration of a deformable portion of the support rail bracket of FIGS. 2-3.

### DETAILED DESCRIPTION

The disclosure herein relates to a support rail bracket for a vehicle. In some instances, a support rail is included in a vehicle and is configured to be grasped by an occupant for support when entering or exiting the vehicle, or when moving within the vehicle. When not being used to support an occupant, the support rail may be inadvertently contacted by an occupant (e.g., if the vehicle changes directions quickly, and/or accelerates or decelerates quickly, etc.).

Embodiments disclosed herein are directed to a support rail bracket that is coupled to a support rail of a vehicle and is configured to move relative to the vehicle when contacted inadvertently by an occupant. In some implementations, the support rail bracket includes a base and a securement portion that is coupled to an end section of a support rail. A deformable portion is configured to resist movement of the end portion in one direction, and is configured to deform to allow movement of the end section in an opposite direction. In some implementations, the deformable portion is configured to deform when a load applied to the support rail is greater than a threshold value.

In an example implementation, a support rail bracket includes braces extending approximately perpendicularly to a base. Lateral supports extend between the braces and secure an end section of a support rail. A deformable portion is coupled to a vertical support and to the base, and is configured to allow movement of the braces when under a compressive load. The deformable portion is configured to limit movement of the braces when under a tensile load.

In some implementations, the deformable portion includes a geometric feature that enables the deformable portion to deform when the load is applied to the deformable portion.

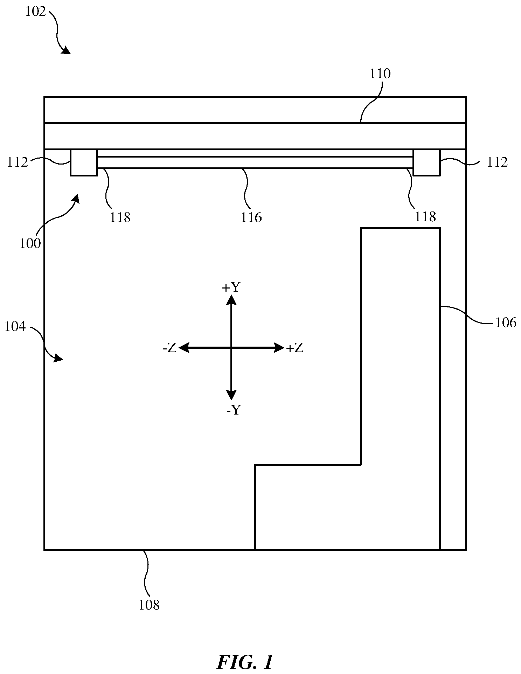

FIG. 1 is an illustration of a support assembly 100 for a vehicle 102. In some implementations, the vehicle 102 can be any type of vehicle including, but not limited to, gas or diesel-powered vehicles, electric vehicles, boats or other marine vehicles, aircraft (e.g., airplanes, helicopters, etc.), remote-controlled vehicles, etc. In some implementations, the vehicle 102 is an autonomous vehicle. The vehicle 102 is shown to include a cabin 104 that is configured to hold one or more occupants. A seat 106 is coupled to a floor 108 in the cabin 104 and is configured to support an occupant when seated.

The vehicle 102 also includes a structural member 110 that is shown extending across the cabin 104. The structural member 110 may be, for example, a beam that extends longitudinally along the length of the vehicle 102 (e.g., between a front portion of the vehicle 102 and a rear portion of the vehicle 102), as shown in FIG. 1. The structural member 110 may also be, for example, a beam that extends transversely across the vehicle 102 (e.g., between a first side portion of the vehicle 102 and a second side portion of the vehicle 102 that is located opposite the first side portion). The structural member 110 is configured to provide longitudinal and/or lateral support for the vehicle 102 based on the orientation of the structural member 110. Furthermore, the structural member 110 may be shaped to conform with a shape of the vehicle 102. For example, a roof structure of the vehicle 102 may have an arcuate shape, and the structural member 110 may be shaped to conform to the arcuate shape while providing support for the vehicle 102.

The support assembly 100 includes a support rail bracket 112 for the vehicle 102 that is configured to interface with a support rail 116. For example, the support rail 116 may be coupled to the support rail bracket 112 via welding, brazing, soldering, or any other heat-based joining process. The support rail 116 may also be coupled to the support rail bracket 112 using a mechanical fastener such as a rivet, a bolt, a screw, or any other type of mechanical fastener. As shown, there are two support rail brackets 112 coupled to the structural member 110, and each of the support rail brackets 112 is configured to interface with the support rail 116 via a corresponding coupling. In some implementations, there may be more or fewer of the support rail brackets 112 configured to interface with the support rail 116.

The support rail 116 extends between the support rail brackets 112 and is configured to provide support to an occupant when entering and/or exiting the vehicle 102. As shown, the support rail 116 includes an end section 118 configured to interface with the support rail brackets 112 such that the support rail brackets 112 secure the support rail 116. As shown, the support rail 116 includes two end sections 118 that are configured to interface with respective ones of the support rail brackets 112. In various arrangements, the number of end sections 118 is the same as the number of support rail brackets 112 such that each of the end sections 118 interfaces with a corresponding one of the support rail brackets 112. Arranged as described, the support rail bracket 112 supports the support rail 116 and the loads applied to the support rail 116 by one or more occupants entering and/or exiting the vehicle 102 and/or for supporting the occupants as they move within the vehicle 102.

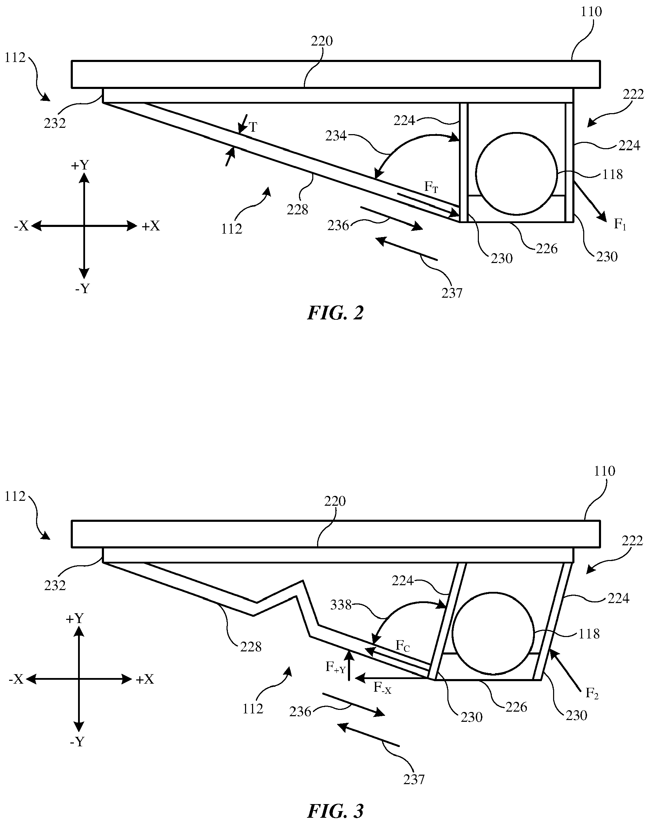

FIGS. 2-3 are illustrations of a support rail bracket 112 for the support assembly 100 of FIG. 1. The support rail bracket 112 is shown to include a base 220 configured to couple to the structural member 110 of the vehicle 102. In some implementations, the base 220 may be coupled to the structural member 110 mechanically (e.g., via connectors such as bolts, screws, rivets, etc.). The base 220 may also be coupled to the structural member chemically (e.g., via adhesives, solvents, etc.). A securement portion 222 is coupled to the base 220 and is configured to secure the end section 118 of the support rail 116, which is graspable for support (e.g., by the occupant) during transportation of the vehicle 102. The securement portion 222 includes braces 224 coupled to and extending away from the base 220. In some implementations, the braces 224 are disposed approximately perpendicular relative to the base 220. For example, the braces 224 may be within ten degrees of perfectly perpendicular relative to the base 220. The braces 224 may also be disposed at different angles relative to the base 220. For example, the braces 224 may be disposed at an acute angle or an obtuse angle relative to the base 220. The securement portion 222 may also include one or more lateral supports 226 coupled to and extending between the braces 224. The lateral supports 226 are configured to couple to the end section 118 (e.g., via welding, brazing, soldering, adhesives, mechanical fasteners, etc.) and are configured to secure the end section 118 to the support rail bracket 112. In some implementations, the end section 118 is coupled to the braces 224. The end section 118 may also be coupled to both the braces 224 and the lateral supports 226.

A deformable portion 228 is coupled to and extends between the base 220 and the securement portion 222 (e.g., the deformable portion 228 is positioned between the base 220 and one of the braces 224). The deformable portion 228 may be coupled to an end segment 232 of the base 220 and to an end segment 230 of the securement portion 222. In some embodiments, the deformable portion 228 extends between the end segment 232 and the end segment 230 at a nonzero angle 234 with respect to the securement portion 222. The deformable portion 228 may extend approximately linearly between the end segment 232 and the end segment 230 such that the nonzero angle 234 is constant between the deformable portion 228 and the securement portion 222 along a length of the deformable portion 228. The deformable portion 228 may also extend nonlinearly between the end segment 232 and the end segment 230 such that the nonzero angle 234 changes (e.g., is not constant) between the deformable portion 228 and the securement portion 222 along the length of the deformable portion 228. In some implementations, the deformable portion 228 has a convex shape relative to the securement portion 222. The deformable portion 228 may also have a concave shape relative to the securement portion 222.

In some implementations, the deformable portion 228 is configured to resist movement of the end section 118 in a first direction 236 and to deform to allow movement of the end section 118 in a second direction 237 that is approximately opposite the first direction 236. For example, an occupant may grip the support rail 116 during ingress or egress. The force F₁ imparted to the support rail 116 by the occupant may be directed at least partially in the positive x-direction and partially in the negative y-direction (e.g., the vector F₁ may have both a positive x-component and a negative y-component). The deformable portion 228 is configured to resist movement of the end section 118 (and the support rail 116) in the direction of F₁ (e.g., in the positive x-direction and in the negative y-direction). More specifically, in some implementations the deformable portion 228 is configured to resist movement of the end section 118 when a force is imparted to the support rail 116 in the positive x-direction, the negative y-direction, or any combination thereof (e.g., any force imparted to the support rail that is directed anywhere within a vector space bounded by the positive x-axis and the negative y-axis).In some implementations, a force may also be directed at least partially in the positive x-direction and partially in the positive y-direction (e.g., the force may be directed anywhere within a vector space bounded by the positive x-axis and the positive y-axis). The deformable portion may also be configured to resist movement of the end section 118 (and the support rail 116) in the positive x-direction and the positive y-direction.

In contrast, an occupant may inadvertently contact the support rail 116 during a vehicle event (e.g., a rapid acceleration, rapid deceleration, etc.). The contact between the occupant and the support rail 116 imparts a force of F₂ to the support rail bracket 112 (e.g., the end section 118 of the support rail 116 transmits the force F₂ to the securement portion 222), where the force F₂ is directed approximately opposite to F₁ (e.g., F₂ includes force vector components that are opposite of the force vector components of F₁). More specifically, F₂ includes vector components directed in the negative x-direction and the positive y-direction, whereas F₁ includes vector components directed in the positive x-direction and the negative y-direction. As described, the deformable portion 228 is under a tensile load F_{T} when F₁ is applied to the support rail 116, and the deformable portion 228 is under a compressive load F_{C} when F₂ is applied to the support rail 116. The deformable portion 228 is configured to limit movement of the braces 224 and the lateral supports 226 (e.g., the securement portion 222) when the deformable portion 228 is under a tensile load (as shown in FIG. 2), and the deformable portion 228 is configured to deform to allow movement of the braces 224 and the lateral supports 226 when the deformable portion 228 is under the compressive load F_{C} (as shown in FIG. 3). As shown, the compressive load F_{C} may include the vector components F_{-X} and F_{+Y} (e.g., the x- and y-vector components, respectively, of F_{C}). Thus, in some implementations the deformable portion 228 is configured to allow movement of the end section 118 when a force is imparted to the support rail 116 in the negative x-direction (e.g., F_{-X}), the positive y-direction (e.g., F_{+Y}), or any combination thereof (e.g., any force imparted to the support rail that is directed anywhere within a vector space bounded by the negative x-axis and the positive y-axis). In various implementations, the securement portion 222 is configured to apply the compressive load F_{C} to the deformable portion 228. For example, the securement portion 222 may apply the compressive load F_{C} at a nonzero angle 338 with respect to the securement portion 222, and the deformable portion 228 is configured to deform under the compressive load F_{C}. Furthermore, the deformable portion 228 is configured to deform by bending under the compressive load F_{C}, where the deformable portion 228 is configured to bend relative to the base 220 and the securement portion 222.

In some implementations, the deformable portion 228 is inelastic such that, once the deformable portion 228 is deformed it cannot return to its original configuration. The deformable portion 228 may also include elastic properties such that the deformable portion 228 is configured to reversibly move between an undeformed configuration (as shown in FIG. 2) and a deformed configuration (as shown in FIG. 3), and when the deformable portion 228 is in the deformed configuration, the end section 118 is configured to move toward the deformable portion 228. For example, the braces 224 may be configured to pivot relative to the base 220 to allow the end section 118 to move toward the deformable portion 228. In such embodiments, applying the compressive load F_{c} may initiate movement of the deformable portion 228 from the undeformed configuration to the deformed configuration, and removing the compressive load F_{C} may allow the deformable portion 228 to move from the deformed configuration to the undeformed configuration. When in the undeformed configuration, the deformable portion 228 is configured to resist movement of the end section 118 and when in the deformed configuration, the deformable portion 228 is configured to allow movement of the end section 118. In some implementations, the end section 118 is configured to move between approximately ten millimeters and approximately twenty millimeters when the deformable portion 228 is deformed. For example, the end section 118 may be configured to move to within twenty percent of ten millimeters (e.g., between eight millimeters and twelve millimeters, inclusive).

In some arrangements, the deformable portion 228 is configured to resist movement of the end section 118 when the load applied to the support rail 116 is less than a threshold value. The deformable portion 228 may also be configured to deform to allow movement of the end section 118 when the load applied to the support rail 116 is greater than the threshold value. More specifically, the deformable portion 228 is configured to deform when the load applied to the support rail 116 imparts the compressive load F_{C} to the deformable portion 228, and the compressive load F_{C} is greater than the threshold value. The deformable portion 228 is also configured to resist deformation when the compressive F_{C} load is less than or equal to the threshold value. For example, an occupant may grip the support rail 116 for support during ingress and/or egress or to otherwise move within the vehicle 102 and may impart the compressive load F_{C} to the deformable portion 228 while gripping the rail. The compressive load F_{C} imparted by the occupant when gripping the support rail 116 for support may be below the threshold value, and the deformable portion 228 will resist deformation, thereby providing a stable support for the occupant. In embodiments where the occupant inadvertently contacts the support rail 116 from, for example, a vehicle event, the contact may impart the compressive F_{C} load to the deformable portion 228, and the compressive load F_{C} may be greater than the threshold value. In response to the contact, the deformable portion 228 is configured to deform such that the deformable portion 228 absorbs at least some of the energy imparted to the support rail 116 from the contact by the occupant. Thus, the threshold value represents the loading at which deformation of the deformable portion 228 will occur and may be dependent upon the geometric configuration of the deformable portion 228, the material properties of the deformable portion 228, and/or other factors.

Implementations above are described relative to a two-dimensional plane (e.g., the x-y plane). However, the above descriptions apply to forces imparted to the support rail 116 in three-dimensional space (e.g., the x-y-z space). For example, F₁ and/or F₂ may include vector components in the positive or negative z-directions (e.g., into or out of the page). The support rail bracket 112 is configured to resist movement of the support rail 116 in both the positive and negative z-directions, so that any movement of the support rail 116 occurs in the x-y plane.

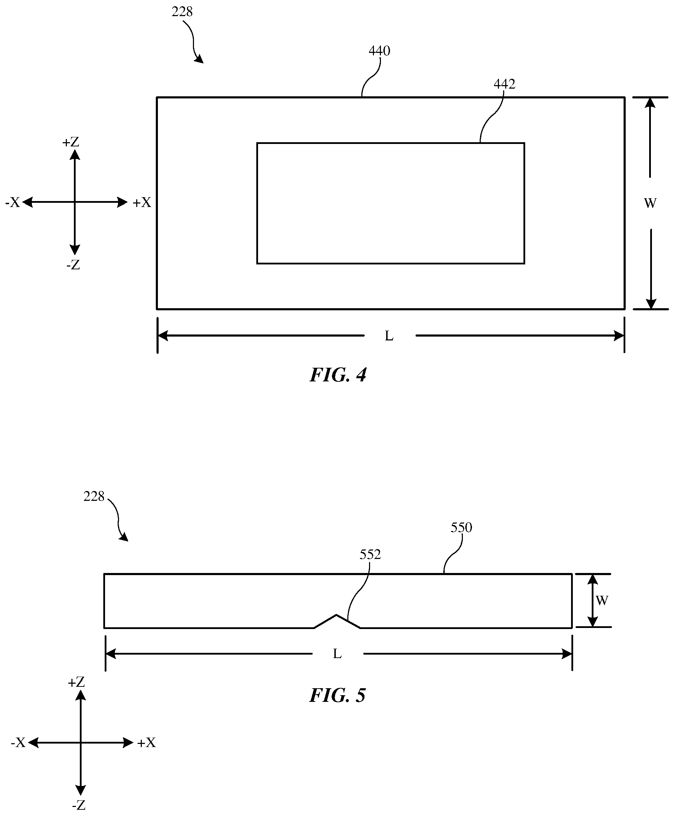

FIG. 4 is an illustration of an embodiment of the deformable portion 228 of FIGS. 2-3. As shown, the deformable portion 228 includes a plate 440. The plate 440 may include materials that exhibit elastic properties such as metals, plastics, shape memory alloys, or combinations thereof. The plate 440 is shown as having a rectangular shape, but the plate 440 may have other shapes such as circular, oval, polygonal, or irregular shapes. The plate 440 includes a length L, a width W, and a thickness T (as shown in FIG. 2).

The threshold value may be based in part on a relationship between the length L, width W, and thickness T of the plate 440. For example, as the ratio between the length L, width W, and thickness T approaches 1:1:1 (e.g., as a shape of the plate 440 approaches a cubic shape), the threshold value increases. In contrast, as the ratio between the length L, width W, and thickness T becomes more unbalanced (e.g., as a shape of the plate 440 approaches a thin rectangular shape), the threshold value decreases. In some embodiments, the length L of the plate 440 is at least ten times greater than the thickness T of the plate 440. In some embodiments, the width W of the plate 440 is at least five times greater than the thickness T of the plate 440. The plate 440 also defines a central aperture 442 that is sized to allow the deformable portion 228 to deform when the compressive load F_{C} is greater than the threshold value. As shown, the central aperture 442 has a rectangular shape, but the central aperture 442 may have other shapes. In some embodiments, the shapes of the plate 440 and the central aperture 442 are the same shape (e.g., both rectangular, square, etc.). The plate 440 and the central aperture 442 may also have shapes that are different (e.g., the plate 440 may have a rectangular shape and the central aperture 442 may have a circular shape).

The threshold value may also be based in part on a relationship between a size of the plate 440 and a size of the central aperture 442. For example, as the size of the central aperture 442 increases (e.g., as the size of the central aperture 442 approaches the size of the plate 440), the ability of the plate 440 to resist deformation decreases, thus the threshold value decreases. In contrast, as the size of the central aperture 442 decreases (e.g., as the size of the central aperture 442 approaches zero), the ability of the plate 440 to resist deformation increases, thus the threshold value increases.

FIG. 5 is an illustration another embodiment of the deformable portion 228 of FIGS. 2-3. As shown, the deformable portion 228 includes a rod 550 that is configured to buckle when the compressive load F_{C} is greater than the threshold value. The rod 550 may include materials that exhibit elastic properties such as metals, plastics, shape memory alloys, or combinations thereof. The rod 550 is shown as having a rectangular shape, but the rod 550 may have other shapes such as cylindrical, oval, polygonal, or irregular shapes. The rod 550 includes a length L, a width W, and a thickness T (as shown in FIG. 2). In implementations where the rod 550 has a cylindrical shape, the width W and the thickness T of the rod 550 may be the diameter of the rod 550.

The threshold value may be based in part on a relationship between the length L, width W, and thickness T of the rod 550. For example, as the rod 550 becomes longer and thinner, the ability of the rod 550 to resist deformation decreases, thus the threshold value decreases. In contrast, as the rod 550 becomes shorter and thicker, the ability of the rod 550 to resist deformation increases, thus the threshold value increases.

In some implementations, the rod 550 includes a geometric feature 552 that enables the deformable portion 228 to deform when the compressive load F_{C} (e.g., the load applied to the support rail 116) is greater than the threshold value. More specifically, the geometric feature 552 enables the rod 550 to buckle when the compressive load F_{C} is greater than the threshold value. The geometric feature 552 may be a notch, a cutout, an indentation, or any other geometric irregularity that may result in an increase in stress and/or strain in the rod 550 at the location of the geometric feature 552.

Though shown in FIG. 5 as located approximately at a central portion of the rod 550, the geometric feature 552 can be positioned at other portions of the rod 550. For example, the geometric feature 552 can be positioned closer to the end segment 230 or the end segment 232. The position of the geometric feature 552 may allow the rod 550 to buckle in a repeatable manner. For example, when the compressive load F_{C} is greater than the threshold value, the rod 550 may buckle in the location of the geometric feature 552. In embodiments where the deformable portion 228 is reversible, the rod 550 may buckle in the location of the geometric feature 552 in each instance in which the compressive load F_{C} is greater than the threshold value.

The threshold value may also be based in part on a relationship between a size of the rod 550 and a size of the geometric feature 552. For example, as a size of the geometric feature 552 becomes larger (e.g., the size of the geometric feature 552 approaches the size of the rod 550), the threshold value decreases, and as a size of the geometric feature 552 becomes smaller, (e.g., the size of the geometric feature 552 approaches zero), the threshold value increases.

Returning to FIG. 4, the central aperture 442 may also be considered a geometric feature that allows the plate 440 to deform. In addition, the plate 440 may include an additional geometric feature similar to the geometric feature 552. For example, the plate 440 may also include one or more of the additional geometric features near the central aperture 442 to allow the plate 440 to deform near the central aperture 442.

As described, one aspect of the disclosure is related to a support rail bracket for a vehicle that includes a base configured to couple to the vehicle. A securement portion is coupled to the base and configured to secure an end section of a support rail, which is graspable for support during transportation. A deformable portion is coupled to and extends between the base and the securement portion. The deformable portion is configured to resist movement of the end section in a first direction and to deform to allow movement of the end section in a second direction that is approximately opposite the first direction.

In some implementations, the deformable portion may include a plate that defines a central aperture. The length of the plate may be at least ten times greater than the thickness of the plate. The width of the plate may also be at least five times greater than a thickness of the plate.

In some implementations, the deformable portion may be configured to deform by bending relative to the base and the securement portion under a compressive load. The deformable portion may be configured to move from an undeformed configuration to a deformed configuration in response to applying the compressive load, and the deformable portion may be configured to move from the deformed configuration to the undeformed configuration in response to removing the compressive load. In some implementations, the securement portion may be configured to apply the compressive load.

In some implementations, the deformable portion may be configured to reversibly move between an undeformed configuration and a deformed configuration. The deformably portion may also be configured to resist movement of the end section when in the undeformed configuration, and the deformable portion may be configured to allow movement of the end section when in the deformed configuration.

In some implementations, the deformable portion is coupled to an end segment of the base and to an end segment of the securement portion. The deformable portion may extend between the end segment of the base and the end segment of the securement portion at a nonzero angle with respect to the securement portion. The deformable portion may also be configured to deform under a compressive load that is applied to the deformable portion at the nonzero angle.

Another aspect of the disclosure is related to a support rail bracket for a vehicle that includes a base configured to couple to the vehicle. Braces are coupled to and extend away from the base, and the braces are disposed approximately perpendicular relative to the base. Lateral supports are coupled to and extend between the braces, and the lateral supports are configured to secure an end section of a support rail to the base, where the support rail is graspable for support during transportation. A deformable portion is positioned between the base and one of the braces and is configured to limit movement of the braces when the deformable portion is under a tensile load. The deformable portion is also configured to deform to allow movement of the braces when the deformable portion is under a compressive load.

In some implementations, the deformable portion may be configured to deform when the compressive load is greater than a threshold value. The deformable portion may also include a plate that defines a central aperture that is sized to allow the deformable portion to deform when the compressive load is greater than the threshold value.

In some implementations, the end section may be configured to move between ten millimeters and twenty millimeters when the deformable portion is deformed. The deformable portion may also include a rod that is configured to buckle when the compressive load is greater than a threshold value. The rod may include a geometric feature that enables the rod to buckle when the compressive load is greater than a threshold value.

Yet another aspect of the disclosure is related to a support rail bracket for a vehicle that includes a base configured to couple to the vehicle. A securement portion is coupled to the base and is configured to secure an end section of a support rail. A deformable portion is coupled to and extends between the securement portion and the base. The deformable portion is configured to resist movement of the end section when a load applied to the support rail is less than a threshold value, and to deform to allow movement of the end section when the load applied to the support rail is greater than the threshold value.

In some implementations, the deformable portion may be coupled to an end segment of the base and to an end segment of the securement portion. The deformable portion may also extend between the end segment of the base and the end segment of the securement portion at a nonzero angle with respect to the securement portion.

In some implementations, the deformable portion may be configured to deform when the load applied to the support rail imparts a compressive load to the deformable portion, and the compressive load is greater than the threshold value. The deformable portion may also include a geometric feature that that enables the deformable portion to deform when the load applied to the support rail is greater than the threshold value.

In some implementations, the end section may be configured to move toward the deformable portion when the deformable portion is in a deformed configuration.

As described above, one aspect of the present technology is the gathering and use of data available from various sources for use during operation of a vehicle that includes the support rail bracket 112. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference information related information that allows adjustment of operation of the vehicle according to the user preference information. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operating the vehicle, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the vehicle is used, such as by the user entering the user preference information in real time, and without subsequently storing the information or associating with the particular user.

### NUMBERED STATEMENTS OF THE INVENTION

1. A support rail bracket for a vehicle, comprising:
   a base configured to couple to the vehicle;
   a securement portion coupled to the base and configured to secure an end section of a support rail, wherein the support rail is graspable for support during transportation; and
   a deformable portion coupled to and extending between the base and the securement portion, wherein the deformable portion is configured to:
      resist movement of the end section in a first direction; and
      deform to allow movement of the end section in a second direction that is approximately opposite the first direction.
2. The support rail bracket of statement 1, wherein the deformable portion includes a plate that defines a central aperture.
3. The support rail bracket of statement 2, wherein a length of the plate is at least ten times greater than a thickness of the plate.
4. The support rail bracket of statement 2, wherein a width of the plate is at least five times greater than a thickness of the plate.
5. The support rail bracket of statement 1, wherein the deformable portion is configured to deform by bending under a compressive load, and wherein the deformable portion is configured to bend relative to a bending axis extending through the base and the securement portion.
6. The support rail bracket of statement 5, wherein the securement portion is configured to apply the compressive load.
7. The support rail bracket of statement 5, wherein applying the compressive load causes the deformable portion to move from an undeformed configuration to a deformed configuration, and removing the compressive load allows the deformable portion to move from the deformed configuration to the undeformed configuration.
8. The support rail bracket of statement 1, wherein the deformable portion is configured to reversibly move between an undeformed configuration and a deformed configuration.
9. The support rail bracket of statement 8, wherein the deformable portion is configured to resist movement of the end section when in the undeformed configuration, and the deformable portion is configured to allow movement of the end section when in the deformed configuration.
10. The support rail bracket of statement 1, wherein the deformable portion is coupled to an end segment of the base and to an end segment of the securement portion.
11. The support rail bracket of statement 10, wherein the deformable portion extends between the end segment of the base and the end segment of the securement portion at a nonzero angle with respect to the securement portion.
12. The support rail bracket of statement 11, wherein the deformable portion is configured to deform under a compressive load that is applied to the deformable portion at the nonzero angle.
13. A support rail bracket for a vehicle, comprising:
   a base configured to couple to the vehicle;
   vertical supports coupled to and extending away from the base, the vertical supports disposed approximately perpendicular relative to the base;
   lateral supports coupled to and extending between the vertical supports, the lateral supports configured to secure an end section of a support rail to the support rail bracket, wherein the support rail is graspable for support during transportation; and
   a deformable portion positioned between the base and one of the vertical supports,
   wherein the deformable portion is configured to:
      limit movement of the vertical supports when the deformable portion is under a tensile load; and
      deform to allow movement of the vertical supports when the deformable portion is under a compressive load.
14. The support rail bracket of statement 13, wherein the deformable portion is configured to deform when the compressive load is greater than a threshold value.
15. The support rail bracket of statement 14, wherein the deformable portion includes a plate that defines a central aperture that is sized to allow the deformable portion to deform when the compressive load is greater than the threshold value.
16. The support rail bracket of statement 13, wherein the end section is configured to move between ten millimeters and twenty millimeters when the deformable portion is deformed.
17. The support rail bracket of statement 13, wherein the deformable portion includes a rod that is configured to buckle when the compressive load is greater than a threshold value.
18. The support rail bracket of statement 17, wherein the rod includes a geometric feature that enables the rod to buckle when the compressive load is greater than the threshold value.
19. The support rail bracket of statement 13, wherein the deformable portion is configured to reversibly move between an undeformed configuration and a deformed configuration.
20. A support rail bracket for a vehicle, comprising:
   a base coupled to the vehicle;
      a securement portion coupled to the base and configured to secure an end section of a support rail; and
   a deformable portion coupled to and extending between the securement portion and the base, wherein the deformable portion is configured to:
      resist movement of the end section when a load applied to the support rail is less than a threshold value; and
      deform to allow movement of the end section when the load applied to the support rail is greater than the threshold value.
21. The support rail bracket of statement 20, wherein the deformable portion is coupled to an end segment of the base and to an end segment of the securement portion.
22. The support rail bracket of statement 21, wherein the deformable portion extends between the end segment of the base and the end segment of the securement portion at a nonzero angle with reference to the securement portion.
23. The support rail bracket of statement 20, wherein the deformable portion is configured to deform when the load applied to the support rail imparts a compressive load to the deformable portion, and the compressive load is greater than the threshold value.
24. The support rail bracket of statement 20, wherein the deformable portion includes a geometric feature that that enables the deformable portion to deform when the load applied to the support rail is greater than the threshold value.
25. The support rail bracket of statement 20, wherein the end section is configured to move toward the deformable portion when the deformable portion is in a deformed configuration.

## Claims

1. A support rail bracket for a vehicle, comprising:
a base configured to couple to the vehicle;
a securement portion coupled to the base and configured to secure an end section of a support rail, wherein the support rail is graspable for support during transportation; and
a deformable portion coupled to and extending between the base and the securement portion, wherein the deformable portion is configured to:
resist movement of the end section in a first direction; and
deform to allow movement of the end section in a second direction that is approximately opposite the first direction.

2. The support rail bracket of claim 1, wherein the deformable portion includes a plate that defines a central aperture.

3. The support rail bracket of claim 2, wherein a length of the plate is at least ten times greater than a thickness of the plate.

4. The support rail bracket of claim 2, wherein a width of the plate is at least five times greater than a thickness of the plate.

5. The support rail bracket of claim 1, wherein the deformable portion is configured to deform by bending under a compressive load, and wherein the deformable portion is configured to bend relative to the base and the securement portion.

6. The support rail bracket of claim 5, wherein the securement portion is configured to apply the compressive load.

7. The support rail bracket of claim 5, wherein the deformable portion is configured to move from an undeformed configuration to a deformed configuration in response to applying the compressive load, and the deformable portion is configured to move from the deformed configuration to the undeformed configuration in response to removing the compressive load.

8. The support rail bracket of claim 1, wherein the deformable portion is configured to reversibly move between an undeformed configuration and a deformed configuration.

9. The support rail bracket of claim 8, wherein the deformable portion is configured to resist movement of the end section when in the undeformed configuration, and the deformable portion is configured to allow movement of the end section when in the deformed configuration.

10. The support rail bracket of claim 1, wherein the deformable portion is coupled to an end segment of the base and to an end segment of the securement portion.

11. The support rail bracket of claim 10, wherein the deformable portion extends between the end segment of the base and the end segment of the securement portion at a nonzero angle with respect to the securement portion.

12. The support rail bracket of claim 11, wherein the deformable portion is configured to deform under a compressive load that is applied to the deformable portion at the nonzero angle.

13. The support rail bracket of claim 11, wherein the deformable portion is configured to deform under a compressive load that is greater than a threshold value.

14. The support rail bracket of claim 13, wherein the deformable portion includes a plate that defines a central aperture that is sized to allow the deformable portion to deform when the compressive load is greater than the threshold value.

15. The support rail bracket of claim 13, wherein the deformable portion includes a rod that is configured to buckle when the compressive load is greater than a threshold value.
